# EUROPÄISCHE PATENTSCHRIFT

(11) **EP 2 330 394 B1**
(45) Veröffentlichungstag und Bekanntmachung des Hinweises auf die Patenterteilung: **06.03.2019**
(21) Anmeldenummer: 10015100.0
(22) Anmeldetag: 29.11.2010
(51) Int. Cl.: G01J 3/52, G09F 5/04, E04F 21/165

(54) **Farbkarte zur Ermittlung einer Farbe eines Fugenmaterials und Verwendung derselben**
Colour card for determining the colour of a joint material and use of same
Carte de couleurs pour l'établissement d'une couleur d'un matériau de jointoiement et son utilisation

(30) Priorität: 27.11.2009 DE 102009056168
(43) Veröffentlichungstag der Anmeldung: 08.06.2011
(73) Patentinhaber: Sopro Bauchemie GmbH, 65102 Wiesbaden (DE)
(72) Erfinder: Reitemeier, Lutz, 55124 Mainz (DE)
(74) Vertreter: Diehl & Partner GbR

(56) Entgegenhaltungen:
- DE-T2- 69 310 646
- US-A- 2 240 053
- US-B1- 6 976 328

## Beschreibung

Die Erfindung betrifft eine Farbkarte zur Ermittlung einer Farbe eines Fugenmaterials, einen Farbkarten-Satz und ein Verfahren zum Ermitteln einer Farbe eines Fugenmaterials.

Bei der Erstellung von Fliesenflächen in Räumen, wie etwa Wohnräumen, Geschäftsräumen oder Sanitärräumen, wählt ein Verbraucher üblicherweise zunächst einen Fliesentyp anhand von dessen Farbe, Oberflächenstruktur, Größe und dergleichen aus. Der optische Gesamteindruck einer Fliesenfläche wird allerdings nicht nur durch die ausgewählten Fliesen selbst, sondern auch durch die zwischen den einzelnen Fliesen vorhandenen Fugen bestimmt. Eine Farbe des Fugenmaterials wird deshalb häufig auf die Farbe und Textur der Fliesen abgestimmt. Im Allgemeinen hat ein verwendetes Fugenmaterial eine Farbe, die deutlich verschieden ist von der Farbe der die Fuge umgebenden Fliesen. Wird ein Fugenmaterial einer bestimmten Farbe anhand von persönlichen Geschmackskriterien ausgewählt, so kann es sein, dass dann, wenn dieses Fugenmaterial zwischen den Fliesen eingebracht ist, dieses die erwartete Farbwirkung nicht entfaltet. Dies wird insbesondere bei großen Hell-/Dunkel- und Farbkontrasten zwischen dem Fugenmaterial und den Fliesen der Fall sein.

Die Druckschrift DE 693 10 646 T2 offenbart eine Farbtonkarte zum Vorstellen eines dekorativen plattenförmigen Materials. Die Farbtonkarte weist somit ein plattenförmiges Material mit einer Gruppe von vier Ausnehmungen auf, wobei zwei Paare von Ausnehmungen nebeneinander angeordnet sind und jeweils durch einen vertikalen Trenn-Steg voneinander getrennt sind, wobei zwei Paare von Ausnehmungen übereinander angeordnet sind und jeweils durch einen horizontalen Trenn-Steg voneinander getrennt sind. Die Stege sind dabei parallel zu den Rändern der Farbkarte angeordnet.

Die Druckschrift US 6 976 328 B1 offenbart eine Farbkarte zur Bestimmung der Farbe eines Fugenfüllers, mit farbigen Stegen, die senkrecht zueinander angeordnet sind. Die Farbe ist nur auf einer Seite der Farbkarte angebracht, so dass die Farbkarte auf einer Oberfläche, nämlich die Rückseite, die gleiche Farbe aufweist.

Entsprechend ist es eine Aufgabe der vorliegenden Erfindung, Mittel und Verfahren bereit zu stellen, die die Auswahl einer Farbe eines Fliesenmaterials erleichtern.

Gemäß einem Aspekt der Erfindung wird eine Farbkarte zur Ermittlung einer Farbe eines Fugenmaterials bereitgestellt, welche einen Flachmaterialbogen mit einer Gruppe von vier Ausnehmungen umfasst, wobei zwei Paare von Ausnehmungen nebeneinander angeordnet sind und jeweils durch einen vertikalen Trenn-Steg voneinander getrennt sind, wobei zwei Paare von Ausnehmungen übereinander angeordnet sind und jeweils durch einen horizontalen Trenn-Steg voneinander getrennt sind, wobei die horizontalen und vertikalen Trenn-Stege jeweils eine gleiche Stegbreite aufweisen, wobei die beiden horizontalen Trenn-Stege auf einer gemeinsamen horizontalen Geraden angeordnet sind, wobei die beiden vertikalen Trenn-Stege auf einer gemeinsamen vertikalen Geraden angeordnet sind, wobei die horizontale Gerade und die vertikale Gerade sich orthogonal zueinander erstrecken, und wobei eine Oberfläche des Flachmaterial-Bogens durchgehend eine gleiche Farbe aufweist. Die erfindungsgemäße Farbkarte zeichnet sich dadurch aus, dass der Flachmaterial-Bogen zwei oder mehr Gruppen von jeweils vier durch Trenn-Stege getrennten Ausnehmungen umfasst, wobei die Trenn-Stege der ersten Gruppe eine kleinere Stegbreite aufweisen als die Trenn-Stege der zweiten Gruppe.

Die Ausnehmungen sind durch die Stege begrenzte Löcher in dem Flachmaterial, so dass in dem Bereich der Ausnehmungen kein Flachmaterial oder anderes Material vorhanden ist.

Die Farbkarte weist auf ihrer Oberfläche durchgehend eine gleiche Farbe auf, welche die Farbe eines zur Verfügung stehenden Fugenmaterials wiedergibt. Ein Benutzer kann diese Farbkarte so auf einen vorhandenen Fliesenboden legen, dass die Trenn-Stege über den Fugen zwischen den Fliesen des Bodens angeordnet sind und diese Fugen damit abdecken. Links und rechts der Trenn-Stege lassen die Ausnehmungen in dem Flachmaterial-Bogen den direkten Blick auf die Fliesen zu, so dass der Betrachter deren Farbe und Textur unmittelbar wahrnehmen kann. Im Bereich der Fugen nimmt der Betrachter die Trenn-Stege mit deren Farbe, d.h. der Farbe der Oberfläche des Flachmaterialbogens, wahr. Somit kann der Betrachter einen bestehenden Farbkontrast zwischen den Fliesen und dem zur Verfügung stehenden Fugenmaterial abschätzen, obwohl dieses noch nicht in die Fugen eingebracht ist. Basierend auf dieser Abschätzung kann der Benutzer sich dann für oder gegen den Einsatz des zur Verfügung stehenden Fugenmaterials entscheiden, dessen Farbe der Farbe des Flachmaterialbogens entspricht.

Stehen mehrere Fugenmaterialen verschiedener Farben zur Verfügung, so kann für ein jedes Fugenmaterial eine Farbkarte bereitgehalten werden, deren Oberflächenfarbe der Farbe des Fugenmaterials entspricht. Diese mehreren Farbkarten bilden zusammen einen Farbkarten-Satz, welcher einem Benutzer zur Verfügung gestellt werden kann, um aus den mehreren Fugenmaterialien eines zur Einbringung in Fugen zwischen vorhandenen Fliesen auszuwählen. Hierzu wird der Benutzer nacheinander die verschiedenen Farbkarten, wie oben beschrieben, auf die Fliesen legen und eine bevorzugte Farbkarte auswählen, welche nach seinem Empfinden die beste Kombination aus Fliesenfarbe und Fugenfarbe repräsentiert. Anhand der so ermittelten Farbkarte ist es dann möglich, das entsprechende Fugenmaterial auszuwählen und dieses in die Fugen einzubringen.

Die Erfindung wird nachfolgend anhand von Figuren näher erläutert. Hierbei zeigt:
- Figur 1: schematisch eine Fliesenfläche mit einer darauf angebrachten Farbkarte, und
- Figur 2: eine Farbkarte in Draufsicht.

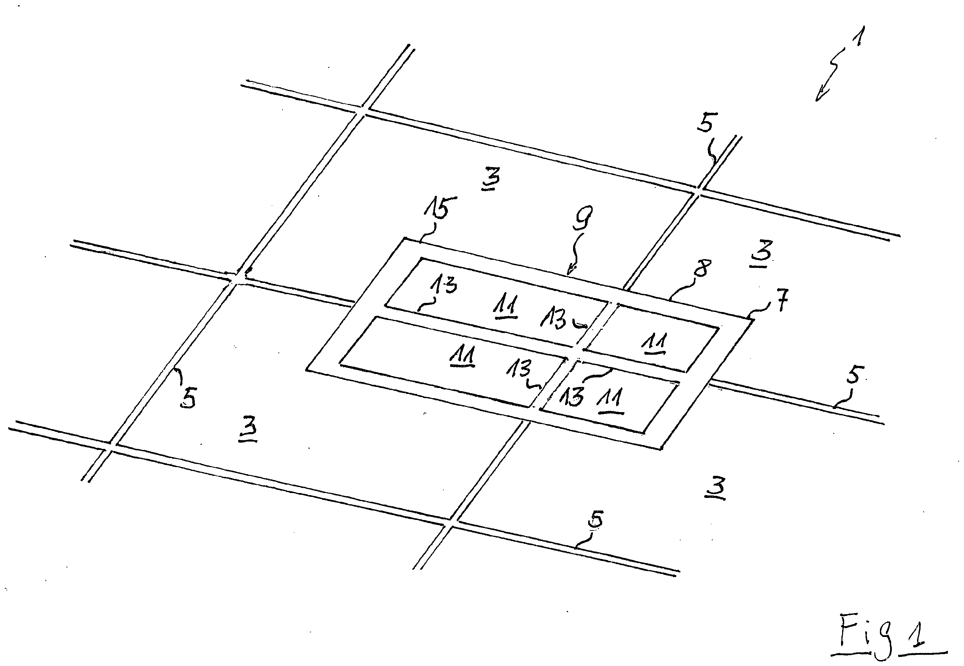

Figur 1 zeigt eine Fliesenfläche 1 mit mehreren Fliesen 3. Die Fliesenfläche 1 kann eine Wand oder Bodenfläche eines Raumes, wie etwa eines Wohnraums oder Sanitärraums, sein. Die einzelnen Fliesen 3 sind an dem Boden bzw. der Wand durch Verkleben befestigt, und zwischen einander benachbarten Fliesen 3 besteht ein Spalt bzw. eine Fuge 5, welche durch ein Fugenmaterial zu verschließen ist. Hierzu ist ein Fugenmaterial auszuwählen, welches farblich auf die Farbe der Fliesen 3 abgestimmt sein soll.

Diese Auswahl der Farbe des Fugenmaterials wird erleichtert durch den Einsatz einer Farbkarte 7, welche einen Flachmaterial-Bogen 8 umfasst, der beispielsweise aus Karton oder Kunststoff oder Papier oder dergleichen gefertigt ist und eine Dicke von beispielsweise weniger als 2 mm oder weniger als 1 mm aufweist.

Der Flachmaterialbogen 7 weist eine Gruppe 9 von vier Ausnehmungen 11 auf, welche paarweise nebeneinander und paarweise übereinander angeordnet sind und voneinander durch Trenn-Stege 13 getrennt sind, welche horizontal bzw. vertikal fluchten und nach Art eines Kreuzes innerhalb eines aus dem Flachmaterial gebildeten Rahmens 15 angeordnet sind. Die Ausnehmungen 11 sind somit jeweils durch zwei Trenn-Stege 13 und zwei Schenkel des Rahmens 15 begrenzt. Eine Breite der Trenn-Stege 13 entspricht in etwa der Breite des Fugenspalts 5 oder ist etwas größer. Typische Werte für Breiten von Fugenspalten sind 4 mm und 8 mm. Bevorzugte Breiten für die Trenn-Stege 13 liegen somit in einem Bereich von 3,5 mm bis 4,5 mm bzw. 7,5 mm bis 8,5 mm. Eine Breite des Rahmens kann größer sein als die Breite der Trenn-Stege. Beispielsweise kann die Breite des Rahmens 15 mehr als 1,5 mal oder mehr als 2,5 mal größer als die Breite der Trenn-Stege 13 sein.

Ein Benutzer legt die Farbkarte 7 nun so wie in Figur 1 dargestellt auf die Fliesen 3. Hierzu wird die Farbkarte 7 auf den Fliesen 3 lateral so verschoben, dass das Kreuz aus den Trenn-Stegen 13 mit einem Kreuz aus Fugenspalten 5 zusammenfällt und die Trenn-Stege 13 somit den Fugenspalt 5 bereichsweise überdecken.

Die Farbe der Oberfläche des Flachmaterials 7 entspricht der Farbe eines zur Verfügung stehenden Fugenmaterials, welches allerdings noch nicht in den Fugenspalt 5 eingebracht ist. In der in Figur 1 dargestellten Situation repräsentieren die Trennstege 13 mit ihrer Farbe die Farbe des zur Verfügung stehenden Fugenmaterials, wenn denn dieses in den Fugenspalt 5 eingebracht wäre. Diese Farbe kann der Benutzer dann in direktem Kontrast mit der Farbe der Fliesen 3 wahrnehmen. Anhand dieser Wahrnehmung kann sich der Benutzer für oder gegen den Einsatz des zur Verfügung stehenden Fugenmaterials und dessen Einbringung in den Fugenspalt 5 entscheiden.

Stehen mehrere Fugenmaterialien verschiedener Farben zur Verfügung, so kann für jedes dieser Fugenmaterialien eine Farbkarte bereitgestellt werden. Diese kann der Benutzer nacheinander in der in Figur 1 dargestellten Weise auf die Fliesen 3 legen, um nacheinander die Wirkung der verschiedenen Fugenmaterialien, wenn diese denn in den Fugenspalt 5 eingebracht wären, zu antizipieren und basierend darauf seine Auswahl aus den zur Verfügung stehenden Fugenmaterialien zu treffen.

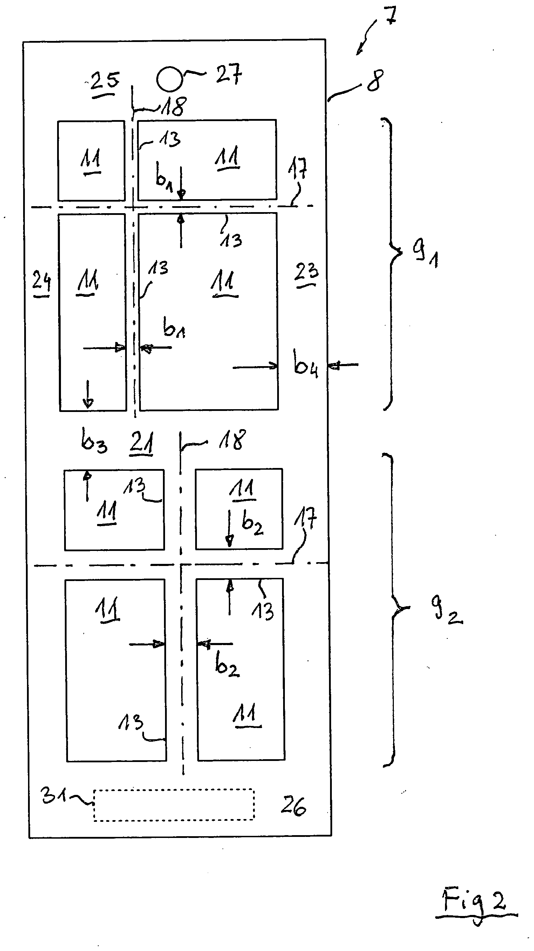

Figur 2 zeigt eine weitere Ausführungsform einer Farbkarte 7, welche einen Flachmaterialbogen 8 umfasst. Die anhand der Figur 2 erläuterte Farbkarte 7, weist einen ähnlichen Aufbau auf wie die in Figur 1 erläuterte Farbkarte, unterscheidet sich von dieser jedoch dadurch, dass sie zwei Gruppen 91 und 92 von jeweils vier Ausnehmungen 11a aufweist. In der in Figur 2 oberen Gruppe 91 sind vier Ausnehmungen paarweise nebeneinander und paarweise übereinander angeordnet und jeweils durch vertikale und horizontale Trennstege 13 getrennt, wobei die horizontalen Trenn-Stege 13 auf einer horizontalen Geraden 17 fluchtend angeordnet sind, und die beiden vertikalen Trenn-Stege 13 auf einer vertikalen Geraden 18 fluchtend angeordnet sind. Die beiden Geraden 17 und 18 erstrecken sich orthogonal zueinander.

Eine Breite b1 der Trenn-Stege 13a der in Figur 2 oberen Gruppe 91 von Ausnehmungen 11 beträgt in dem dargestellten Beispiel 4,5 mm. Die Trennstege 13 dieser Gruppe 91 von Ausnehmungen 11 sind somit besonders dazu geeignet, Fugenspalte einer Breite von 4 mm abzudecken und dem Benutzer eine Farbauswahl für Fugenmaterial zum Verfüllen solcher Fugenspalte zu erleichtern.

Die in Figur 2 unterer Gruppe 92 umfasst wiederum vier Ausnehmungen 11, welche paarweise nebeneinander und paarweise übereinander angeordnet und durch horizontale und vertikale Trennstege 13 getrennt sind, welche fluchtend entlang einer horizontalen Geraden 17 und einer vertikalen Geraden 18 angeordnet sind. Im Unterschied zur der oberen Gruppe 9 weisen die Trenn-Stege 13 der unteren Gruppe 92 eine größere Breite b2 auf. In dem dargestellten Ausführungsbeispiel beträgt die Breite b2 8,5 mm, so dass die Trenn-Stege 13 der unteren Gruppe 92 besonders dazu geeignet sind, Fugenspalte einer Breite von 8 mm zwischen Fliesen abzudecken und dem Benutzer eine Auswahl des Fliesenmaterials zur Verfüllung dieser Fugenspalte zu ermöglichen.

Trenn-Stege 21 zwischen Paaren von Ausnehmungen 11 verschiedener Gruppen 91, 92 können eine wesentlich größere Breite b3 aufweisen als die größere der beiden Breiten b1, b2 der Trenn-Stege 13 der Gruppen 91, 92. Beispielsweise kann die Breite b3 der Trenn-Stege 21 zwischen verschiedenen Gruppen 1,5 mal oder 2,5 mal größer sein als die größere Breite b2 der Trenn-Stege 13. Ebenso können Rahmenstege 23, 24, 25 und 26, welche die Ausnehmungen 11 der Gruppen 9 umgeben, eine größere Breite aufweisen als die Trenn-Stege 13a selbst.

Der Flachmaterialbogen 8 umfasst noch eine Ausnehmung 27, welche in Figur 2 eine Kreisgestalt aufweist, jedoch auch andere Formen haben kann. Diese Ausnehmung 27 dient dazu, die Farbkarte an einem Haltedorn in einem Ladengeschäft zu haltern. Ebenso kann die Ausnehmung 27 dazu dienen, mehrere Farbkarten 7, welche zusammen einen Farbkartensatz bilden, an einer Schnur oder einer Kette zusammenzuhalten.

Die Oberflächen der Trenn-Stege 13 und 21 und der Rahmenstege 23, 24, 25 und 26 weisen eine gleiche Farbe auf. Hierbei ist es insbesondere auch möglich, dass diese Stege auf der Vorderseite des Flachmaterialbogens 8 eine Farbe aufweisen, welche verschieden ist von einer Farbe, welche die Stege auf der Rückseite des Flachmaterialbogens 8 aufweisen. Damit ist eine einzige Farbkarte 7 dazu geeignet, Farben von zwei verschiedenen Fugenmaterialien darzustellen. Steht eine vorgegebene Anzahl in etwa von Fugenmaterialien verschiedener Farben zur Verfügung, so kann deren Auswahl dann mit einem Satz von Farbkarten erleichtert werden, deren Anzahl gleich der Hälfte der Anzahl der zur Verfügung stehenden Fugenmaterialien ist.

Einer der Rahmenstege 23, 24, 25 und 26 der Farbkarte 7a kann ein Bezeichnungsfeld 31 umfassen, in welches eine Beschreibung der Farbe der Oberfläche des Flachmaterial-bogens aufgebracht ist. Die Beschreibung kann in Worten, wie beispielsweise "betongrau", unter Verweis auf eine Produktnummer, wie beispielsweise "14", oder unter Verweis auf die Farbe im Rahmen der RAL-Klassifizierung erfolgen.

Hat der Benutzer aus einem Farbkartensatz eine bestimmte Farbkarte ausgewählt, welche nach seinem Geschmack die gewünschte Farbe des Fugenmaterials repräsentiert, so kann er die in dem Feld 31 dargestellte Bezeichnung der Farbe ablesen und anhand dieser Bezeichnung seine Bestellung für das gewünschte Fugenmaterial vornehmen.

## Patentansprüche

1. Farbkarte zur Ermittlung einer Farbe eines Fugenmaterials, umfassend einen Flachmaterial-Bogen (8) mit mindestens einer Gruppe (9) von vier Ausnehmungen (11), wobei zwei Paare von Ausnehmungen nebeneinander angeordnet sind und jeweils durch einen vertikalen Trenn-Steg (13) voneinander getrennt sind, wobei zwei Paare von Ausnehmungen (11) übereinander angeordnet sind und jeweils durch einen horizontalen Trenn-Steg (13) voneinander getrennt sind, wobei die horizontalen und vertikalen Trenn-Stege jeweils eine gleiche Stegbreite (b) aufweisen, wobei die beiden horizontalen Trenn-Stege (13) auf einer gemeinsamen horizontalen Geraden (17) angeordnet sind, wobei die beiden vertikalen Trenn-Stege (13) auf einer gemeinsamen vertikalen Geraden (18) angeordnet sind, wobei die horizontale Gerade (17) und die vertikale Gerade (18) sich orthogonal zueinander erstrecken, und wobei eine Oberfläche des Flachmaterial-Bogens im Wesentlichen durchgehend eine gleiche Farbe aufweist,
**dadurch gekennzeichnet, dass** der Flachmaterial-Bogen zwei oder mehr Gruppen (9₁, 9₂) von jeweils vier durch Trenn-Stege (13) getrennten Ausnehmungen (11) umfasst und die Trenn-Stege (13) der ersten Gruppe (9₁) eine kleinere Stegbreite aufweisen als die Trenn-Stege (13) der zweiten Gruppe (9₂).

2. Farbkarte nach Anspruch 1, wobei die Stegbreite (b) der Trenn-Stege 3,5 mm bis 5,0 mm oder 7,5 mm bis 9,0 mm beträgt.

3. Farbkarte nach Anspruch 1 oder 2, wobei ein Ende oder beide Enden eines jeden horizontalen Trenn-Stegs (13) oder eines jeden vertikalen Trenn-Stegs (13) der jeweiligen Gruppe (9₁, 9₂) von Ausnehmungen (11) sich an einen Rahmen-Steg (23, 24, 25, 26) anschließen.

4. Farbkarte nach Anspruch 3, wobei eine Stegbreite (b4) des Rahmenstegs größer ist als die Stegbreite (b₁, b₂) der Trenn-Stege (13).

5. Farbkarte nach Anspruch 3 oder 4, wobei die vier Ausnehmungen (11) jeder Gruppe (9₁, 9₂) von Ausnehmungen (11) jeweils rechteckige Ausnehmungen sind.

6. Farbkarte nach Anspruch 1, wobei die Stegbreite (b2) der Trenn-Stege der zweiten Gruppe (9₂) wenigstens 1,5 mal größer und insbesondere 2 mal größer ist als die Stegbreite (b₁) der Trenn-Stege (13) der zweiten Gruppe (9₂).

7. Farbkarte nach einem der vorhergehenden Ansprüche, wobei zwei Ausnehmungen (11) der ersten Gruppe (9₁) von zwei Ausnehmungen (11) der zweiten Gruppe (9₂) durch einen Steg (21) voneinander getrennt sind, dessen Stegbreite (b₃) größer ist, insbesondere mehr als 1,5 mal oder mehr als 2,5 mal größer ist als die größere der Stegbreiten (b₁, b₂) der Trenn-Stege (13) der ersten und der zweiten Gruppe (9₁ und 9₂).

8. Farbkarte gemäß einem der vorhergehenden Ansprüche, wobei das Flachmaterial ein Kartonmaterial oder ein Kunststoffmaterial umfasst, dessen Dicke insbesondere kleiner als 2 mm oder kleiner als 1 mm ist.

9. Farbkarten-Satz umfassend eine Mehrzahl von Farbkarten (7) gemäß einem der Ansprüche 1 bis 8, wobei die Farbkarten sich bezüglich der Farbe der Oberfläche der Flachmaterial-Bögen unterscheiden.

10. Verfahren zum Ermitteln einer Farbe eines Fugen-materials, umfassend:
Anordnen einer Farbkarte (7) gemäß einem der Ansprüche 1 bis 9 auf Fließen (3) derart, dass die Trenn-Stege (13) Fugen (5) zwischen den Fliesen (3) abdecken, und
Auswählen einer Farbe eines Fugenmaterials anhand eines Vergleichs zwischen einer Farbe einer Oberfläche der Fliesen (3) und der Farbe der Oberfläche der Farbkarte (7).

11. Verfahren nach Anspruch 10, wobei nacheinander mehrere Farbkarten eines Farbkarten-Satzes auf den Fliesen angeordnet werden und das Auswählen der Farbe des Fugenmaterials anhand eines Vergleichs zwischen einer Farbe einer Oberfläche der Fliesen und den Farben der Oberflächen der mehreren Farbkarten erfolgt.

12. Verfahren nach Anspruch 10 oder11, ferner umfassend:
Einbringen von Fugenmaterial der ausgewählten Farbe in die Fugen zwischen den Fliesen.

## Claims

1. Color chart for determining a color of a joint material, comprising a flat sheet (8) with at least one group (9) of four recesses (11), wherein two pairs of recesses are arranged side by side and each separated from each other by a vertical separating web (13), wherein two pairs of recesses (11) are arranged one above the other and each separated from one other by a horizontal separating web (13), wherein the horizontal and vertical separating webs each have a same web width (b), wherein the two horizontal separating webs (13) are arranged on a common horizontal straight line (17), wherein the two vertical separating webs (13) are arranged on a common vertical straight line (18), wherein the horizontal straight line (17) and the vertical straight line (18) extend orthogonal to each other, and wherein a surface of the sheet of the joint material is substantially the same color throughout, **characterized in that** the sheet of the joint material comprises two or more groups (9₁, 9₂) of four groups of recesses (11), respectively, each of which separated by separating webs (13), and **in that** the separating webs (13) of the first group (9₁) have a smaller web width as the separating webs (13) of the second group (9₂).

2. The color chart according to claim 1, wherein the land width (b) of the separation lands is 3.5 mm to 5.0 mm or 7.5 mm to 9.0 mm.

3. The color chart according to claim 1 or 2, wherein one end or both ends of each horizontal separating web (13) or of each vertical separating web (13) of the respective group (9₁, 9₂) of recesses (11) adjoin a frame land (23, 24, 25, 26).

4. The color chart according to claim 3, wherein a web width (b4) of the frame web is larger than the web width (b1, b2) of the separating webs (13).

5. The color chart according to claim 3 or 4, wherein the four recesses (11) of each group (9₁, 9₂) of recesses (11) are each rectangular recesses.

6. The color chart according to claim 1, wherein the web width (b₂) of the separating webs of the second group (9₂) is at least 1.5 times larger and in particular 2 times larger than the web width (b₁) of the separating webs (13) of the second group (9₂).

7. The color chart according to one of the preceding claims, wherein two recesses (11) of the first group (9₁) of two recesses (11) of the second group (9₂) are separated from each other by a web (21), the web width (b₃) of which is larger, in particular is more than 1.5 times or more than 2.5 times larger than the larger of the web widths (b₁, b₂) of the separating webs (13) of the first and second groups (9₁ and 9₂).

8. The color chart according to any one of the preceding claims, wherein the flat material comprises a cardboard material or a plastic material, whose thickness is in particular smaller than 2 mm or smaller than 1 mm.

9. A color chart set comprising a plurality of color charts (7) according to any one of claims 1 to 8, wherein the color charts differ from each other in the color of the surface of the sheets of the joint material.

10. A method for determining a color of a joint material, comprising:
arranging a color chart (7) according to any one of claims 1 to 9 on tiles (3) such that the separating webs (13) cover joints (5) between the tiles (3), and selecting a color of a joint material based on a comparison between a color of a surface of the tiles (3) and the color of the surface of the color chart (7).

11. The method of claim 10, wherein a plurality of color charts of a color chart set are successively arranged on the tiles and selecting the color of the joint material is performed based on a comparison between a color of a surface of the tiles and the colors of the surfaces of the plurality of color charts.

12. The method of claim 10 or 11, further comprising:
introducing joint material of the selected color into the joints between the tiles.

## Revendications

1. Carte de couleurs pour déterminer une couleur d'un matériau de jointoiement, comprenant une feuille de matériau plat (8) comprenant au moins un groupe (9) de quatre creux (11), dans laquelle deux couples de creux sont disposés l'un à côté de l'autre et sont séparés chacun l'un de l'autre par une bande de séparation verticale (13), dans laquelle deux couples de creux (11) sont disposés l'un sur l'autre et sont séparés chacun l'un de l'autre par une bande de séparation horizontale (13), dans laquelle les bandes de séparation horizontale et verticale présentent chacune une largeur de bande (b) identique, dans laquelle les deux bandes de séparation horizontales (13) sont disposées sur une droite horizontale (17) commune, dans laquelle les deux bandes de séparation verticales (13) sont disposées sur une droite verticale (18) commune, dans laquelle la droite horizontale (17) et la droite verticale (18) s'étendent orthogonalement l'une par rapport à l'autre, et dans laquelle une surface de la feuille de matériau plat sensiblement continue présente une même couleur,
**caractérisée en ce que** la feuille de matériau plat comprend deux ou plusieurs groupes (9₁, 9₂) chacun de quatre creux (11) séparés par des bandes de séparation (13) et les bandes de séparation (13) du premier groupe (9₁) présentent une largeur de bande inférieure à celle des bandes de séparation (13) du deuxième groupe (9₂),

2. Carte de couleurs selon la revendication 1, dans laquelle la largeur de bande (b) des bandes de séparation est comprise entre 3,5mm et 5,0mm ou entre 7,5mm et 9,0mm.

3. Carte de couleurs selon la revendication 1 ou 2, dans laquelle une extrémité ou deux extrémité de chaque de bande de séparation horizontale (13) ou de chaque bande de séparation verticale (13) des groupes (9₁, 9₂) respectifs de creux (11) se rejoignent sur une bande de cadre (23, 24, 25, 26).

4. Carte de couleurs selon la revendication 3, dans laquelle une largeur de bande (b4) de la bande de cadre est plus large que la largeur de bande (b1, b2) des bandes de séparation (13).

5. Carte de couleurs selon la revendication 3 ou 4, dans laquelle les quatre creux (11) de chaque groupe (9₁, 9₂) de creux (11) sont chacun des creux de forme rectangulaire.

6. Carte de couleurs selon la revendication 1, dans laquelle la largeur de bande (b2) des bandes de séparation du deuxième groupe (9₂) est au moins 1,5 fois plus large et en particulier 2 fois plus large que la largeur de bande (b1) des bandes de séparation (13) du deuxième groupe (9₂),

7. Carte de couleurs selon l'une des revendications précédentes, dans laquelle deux creux (11) du premier groupe (9₁) sont séparés de deux creux (11) du deuxième groupe (9₂) par une bande (21), dont la largeur de bande (b3) est plus large, en particulier plus de 1,5 fois ou plus de 2,5 fois plus large que la plus grande des largeurs de bande (b1, b2) des bandes de séparation (13) des premier et deuxième groupe (9₁ et 9₂),

8. Carte de couleurs selon la revendication précédente, dans laquelle le matériau plat comprend un matériau de carton ou un matériau plastique, dont l'épaisseur est en particulier inférieure à 2mm ou inférieure à 1mm.

9. Ensemble de cartes de couleurs comprenant une pluralité de cartes de couleurs (7) selon l'une des revendications 1 à 8, dans lequel les cartes de couleurs se différencient par la couleur de la surface de la feuille de matériau plat.

10. Procédé pour déterminer une couleur d'un matériau de jointoiement, comprenant :
disposer une carte de couleurs (7) selon l'une des revendications 1 à 9 sur des carreaux de carrelage (3) de sorte que les bandes de séparation (13) recouvrent les joints (5) entre les carreaux de carrelage (3), et
choisir une couleur d'un matériau de jointoiement en fonction d'une comparaison entre une couleur d'une surface des carreaux de carrelage (3) et la couleur de la surface de la carte de couleurs (7).

11. Procédé selon la revendication 10, dans lequel plusieurs cartes de couleurs d'un ensemble de cartes de couleurs sont disposées l'une après l'autre sur les carreaux de carrelage et effectuer le choix de la couleur du matériau de jointoiement en fonction d'une comparaison entre une couleur d'une surface des carreaux de carrelage et les couleurs des surfaces de plusieurs cartes de couleurs.

12. Procédé selon la revendication 10 ou 11, comprenant en outre :
déposer du matériau de jointoiement de la couleur choisie dans les joints entre les carreaux de carrelage.
